# EUROPÄISCHE PATENTANMELDUNG

(11) **EP 1 985 656 A2**
(43) Veröffentlichungstag der Anmeldung: **29.10.2008**
(21) Anmeldenummer: 08150582.8
(22) Anmeldetag: 24.01.2008
(51) Int. Cl.: C08L 9/00, C08L 9/06, C08L 7/00, C08K 3/28, C08K 3/34, C08K 3/14, C08K 3/00

(54) **Kautschukmischung mit verbesserter Rückprallelastizität**

(30) Priorität: 27.04.2007 DE 102007019942
(71) Anmelder: Continental Aktiengesellschaft, 30165 Hannover (DE)
(72) Erfinder: Kramer, Thomas, Dr., 31832, Springe (DE); Weber, Christian, Dr., 30826, Garbsen (DE); Kleffmann, Jens, Dr., 30167, Hannover (DE); Fey, Thomas, Dr., 34454 Bad Arolsen (DE); Schmidt, Carmen, Dr., 30451, Hannover (DE)
(74) Vertreter: Finger, Karsten

(57) **Zusammenfassung**

Die Erfindung betrifft eine Kautschukmischung, insbesondere für Fahrzeugluftreifen und Flachgurte, die zumindest einen Dienkautschuk, nicht angebundene Kieselsäure und neben weiteren Zusatzstoffen noch zusätzlich nicht angebundenes Siliziumcarbid und / oder Siliziumnitrid enthält.

Zur Lösung des Konfliktes zwischen Rissbeständigkeit und Wärmeaufbau ist die Kautschukmischung gekennzeichnet durch folgende Zusammensetzung:
- 30 - 100 phr zumindest eines Dienkautschukes,
- 0 - 5 phr nicht angebundene Kieselsäure,
- 2 - 15 phr nicht angebundenes Siliziumcarbid und / oder Siliziumnitrid,
- 5 - 200 phr sonstige Zusatzstoffe.

## Beschreibung

Die Erfindung betrifft eine Kautschukmischung, insbesondere für Fahrzeugluftreifen und Flachgurte.

Da die Fahreigenschaften eines Reifens, insbesondere Fahrzeugluftreifens, in einem großen Umfang von der Kautschukzusammensetzung des Laufstreifens abhängig sind, werden besonders hohe Anforderungen an die Zusammensetzung der Laufstreifenmischung gestellt. So wurden vielfältige Versuche unternommen, die Eigenschaften des Reifens durch die Variation der Polymerkomponenten, der Füllstoffe und der sonstigen Zuschlagstoffe in der Laufstreifenmischung positiv zu beeinflussen. Dabei muss man berücksichtigen, dass eine Verbesserung in der einen Reifeneigenschaft oft eine Verschlechterung einer anderen Eigenschaft mit sich bringt. So ist eine Verbesserung der Rissbeständigkeit des Reifens in der Regel mit einem erhöhten Wärmeaufbau und dadurch mit einer niedrigeren Rückprallelastizität des Reifens verbunden.

Zur Beeinflussung der Rissbeständigkeit ist es bekannt, insbesondere in Kautschukmischungen für LKW-Laufstreifen, neben der Zugabe von, mit einem Silankupplungsagens angebundener, Kieselsäure als herkömmlichen Füllstoff noch zusätzlich nicht angebundene Kieselsäure hinzuzufügen. Dies wirkt sich allerdings wie bereits beschrieben nachteilig auf den Wärmeaufbau aus, was sich in einer niedrigeren Rückprallelastizität zeigt.

Ferner ist bekannt, in Kautschukmischungen Siliziumcarbid und / oder Siliziumnitrid einzuarbeiten, wobei der diesbezügliche Stand der Technik nun näher vorgestellt wird. Bezüglich des Siliziumcarbids gibt es einen Stand der Technik, wie z.B. DE19539218A, der sich auf kristallines Siliziumcarbid mit einem Korndurchmesser >1µm als Schleifmittel in Kautschukmischungen, z.B. für Reibscheiben, oder, wie z.B. WO0127192A1, als "Spike"-Ersatz in Kautschukmischungen für Laufstreifen eines Fahrzeugluftreifens zur verbesserten Griffigkeit auf vereisten Untergründen bezieht.

Zum Stand der Technik, die sich auf feinkörniges und / oder amorphes Siliziumcarbid und / oder Siliziumnitrid bezieht, sind folgende Druckschriften zu würdigen:
(D1) WO 01053634A1
(D2) DE 3204983A1
(D3) DE 69624499T2
(D4) DE 20317747U1
(D5) EP 0940428A1

D1 beschreibt eine Kautschukmischung und ein Verfahren zur Herstellung der selbigen für die Verwendung in Fahrzeugreifen. Als Füllstoff wird Siliziumcarbid in einem Mengenanteil von 30 bis 200 Anteilen pro hundert Anteile Kautschuk, mit einer BET-Oberfläche von 20 bis 200 m²/g und mit einem Partikeldurchmesser von 10 bis 350 nm verwendet. Das Siliziumcarbid muss mit einem geeigneten Silankupplungsagens an die Polymermatrix angebunden werden.

Aus D2 ist eine Kautschukmischung für Förderbänder, insbesondere für die Deckschicht von Papiertransportbändern in Lichtpauseapparaten, bekannt. Feinteiliges Siliziumcarbid kann hier als Mischungszusatz zur Steuerung des Transportvermögens in einem Anteil von 5 bis 30 Gewichtsanteilen zugegeben werden. Dadurch zeigt sich eine verbesserte Abriebfestigkeit.

D3 beschreibt Silicon-Elastomere mit hoher thermischer Leitfähigkeit, die insbesondere als Füllmaterialien für die Wärmeübertragung bei Kraftfahrzeugteilen, elektronischen Haushaltsgeräten und bei Klebstoffen Verwendung finden. Die thermische Leitfähigkeit wird durch Einbringen einer großen Menge an Füllstoff erhalten. Als Füllstoffe werden u.a. Siliziumcarbid und Siliziumnitrid in Volumenanteilen von über 35-40% und höchstens 65-70% eingesetzt.

Aus D4 ist bekannt zur zusätzlichen Alterungsbeständigkeit und Stabilisierung von elastomergebundenem faserhaltigem Plattenmaterial in einen vulkanisierten Elastomerteil einen Anteil aus einem darin gebundenen Füllstoff zuzufügen. Siliziumcarbid und Siliziumnitrid sind dabei in der Liste der zur Auswahl stehenden Füllstoffe enthalten.

D5 beschreibt ein Verfahren zur Herstellung eines Fahrzeugreifens einen Füllstoff enthaltend, der einzelne Aggregate enthält, die sich aus großen und kleinen Partikeln zusammensetzen, wobei die kleinen Partikel auf die großen Partikel gepfropft werden. Dies soll ein Reagglomerieren der kleinen, im Nanometermaßstab befindlichen Partikel verhindern, um die durch Verwendung von Nanopartikeln erlangten verbesserten Reifeneigenschaften zu gewährleisten. Ein möglicher Füllstoff, der sowohl in großer als auch in kleiner Partikelgröße vorliegen kann, ist hierbei Siliziumcarbid.

Der Erfindung liegt die Aufgabe zu Grunde, Kautschukmischungen insbesondere für Fahrzeugluftreifen und Flachgurte, bereitzustellen, die eine weitere Verbesserung hinsichtlich des Konfliktes zwischen Rissbeständigkeit und Wärmeaufbau bzw. Rückprallelastizität bewirken.

Gelöst wird diese Aufgabe erfindungsgemäß dadurch, dass die Kautschukmischung
- 30 - 100 phr zumindest eines Dienkautschukes,
- 0 - 5 phr nicht angebundene Kieselsäure,
- 2 - 15 phr nicht angebundenes Siliziumcarbid und / oder Siliziumnitrid und
- 5 - 200 phr sonstige Zusatzstoffe aufweist.

Durch teilweise oder vollständiges Ersetzen der nicht angebundenen Kieselsäure durch nicht angebundenes Siliziumcarbid und / oder Siliziumnitrid wird der oben beschriebene Zielkonflikt entschärft.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen.

Überraschenderweise wurde gefunden, dass durch Zugabe bereits einer geringen Menge von nicht angebundenem Siliziumcarbid und / oder Siliziumnitrid die Rissbeständigkeit konstant bleibt und die Rückprallelastizität verbessert wird. Dadurch ist es möglich den Zielkonflikt zwischen Weiterreißwiderstand und Wärmeaufbau bzw. Rückprallelastizität zu entkoppeln. Dies gilt nicht nur für den Fahrzeuglaufstreifen, sondern auch für weitere innere Reifenbauteile. Die Kautschukmischungen für die weiteren inneren Reifenbauteile werden im Folgenden zusammengefasst, und wie in der Reifentechnologie üblich, auch als body compounds oder body-Mischungen bezeichnet.

Weitere Anwendung findet die Zugabe von nicht angebundenem Siliziumcarbid und / oder Siliziumnitrid in der Mischungsentwicklung für Flachgurte, insbesondere für Fördergurte. Im täglichen Einsatz unterliegt insbesondere die Laufseite von Fördergurten starken mechanischen Beanspruchungen, z. B. bei Umlenkung an Antriebs-, Umlenk- und / oder Knicktrommeln und Aushalten der auftretenden Zugkräfte. Daher sind die Alterungs- und Abriebsbeständigkeit sowie der Weiterreißwiderstand bei gleich bleibenden weiteren viskoelastischen Eigenschaften, wie z.B. der Rückprallelastizität, zur Sicherung einer langen Lebensdauer von großer Bedeutung.

Die Kautschukmischung enthält 30 - 100 phr zumindest eines Dienkautschukes. Zu den Dienkautschuken zählen alle Kautschuke mit einer ungesättigten Kohlenstoffkette, die sich zumindest teilweise von konjugierten Dienen ableiten. Besonders bevorzugt ist, wenn der Dienkautschuk oder die Dienkautschuke ausgewählt ist bzw. sind aus der Gruppe, bestehend aus Naturkautschuk (NR), synthetischem Polyisopren (IR), Polybutadien (BR) und weiteren Styrol-Butadien-Copolymeren (SBR). Diese Kautschukmischungen lassen sich gut zu der Kautschukmischung verarbeiten und ergeben in den vulkanisierten Reifen gute Reifeneigenschaften.
Zusätzlich zu den genannten Dienkautschuken kann die Mischung aber auch noch andere Kautschuktypen, die zur Herstellung von Förderbändern zum Einsatz kommen, wie z.B. Styrol-Isopren-Butadien-Terpolymer, Butylkautschuk, Halobutylkautschuk oder Ethylen-Propylen-Dien-Kautschuk (EPDM), enthalten.

Die Kautschukmischung enthält 0 bis 15 phr nicht angebundene Kieselsäure, bevorzugt 0 bis 10 phr und besonders bevorzugt 0 bis 6 phr nicht angebundene Kieselsäure. Das zusätzliche Einmischen von nicht angebundener Kieselsäure ist ein in der Kautschuktechnologie übliches Verfahren, um die Reißeigenschaften von Kautschukmischungen, insbesondere der für LKW-Laufstreifen, zu verbessern. Nachteilig wirkt sich dies allerdings auf den Wärmeaufbau in der betreffenden Kautschukmischung aus, wodurch sich die Rückprallelastizität und somit die viskoelastischen Eigenschaften der jeweiligen Kautschukmischung verschlechtern. Dies drückt sich insbesondere in Kautschukmischungen für Laufstreifen für Fahrzeugreifen als erhöhter Rollwiderstand aus. Aus Hofmann und Gupta, Handbuch der Kautschuktechnologie, Dr. Gupta Verlag, 2001: "Bei der Bestimmung der Rückprallelastizität wird die Energie gemessen, die bei einer kurzen, stoßartigen Verformung verloren geht, ausgedrückt als Verhältnis der wiedergewonnenen zur aufgewendeten Energie. [...] Hierbei wird der Begriff "Elastizität" als quantitativer Kennwert benutzt, der angibt in welchem Maße sich der Werkstoff elastisch verhält und in welchem Maße viskos, also viskoelastisch. Die Elastizität ist umso höher, je weniger Verformungsenergie in Wärme umgewandelt wird."

Zur Entschärfung dieses Zielkonfliktes zwischen Reißeigenschaften und Wärmeaufbau enthält die Kautschukmischung daher zusätzlich oder anstelle der nicht angebundenen Kieselsäure 2 bis 15 phr, bevorzugt 4 bis 10 phr nicht angebundenes Siliziumcarbid und / oder Siliziumnitrid.

Wird die nicht angebundene Kieselsäure massengleich durch nicht angebundenes Siliziumcarbid und / oder Siliziumnitrid ersetzt, so zeigt die Kautschukmischung erhöhte Steifigkeitswerte. Dadurch lässt sich der Gehalt an weiteren Füllstoffen, z.B. Ruß oder durch ein Silankupplungsagens angebundene Kieselsäure reduzieren. Dies führt einerseits zu einer weiteren Reduktion des Wärmeaufbaus in der Kautschukmischung, andererseits kann es auch eine Kostenersparnis darstellen.
Die Partikelgröße des nicht angebundenen Siliziumcarbides und / oder Siliziumnitrides beträgt 10 bis 200 nm im Durchmesser, bevorzugt kleiner als 100 nm im Durchmesser.

Sonstige Zusatzstoffe beinhaltet im Wesentlichen die Gesamtmenge an Füllstoffen, wie z.B. Ruß und / oder Kieselsäure angebunden durch Silankupplungsagentien, Vernetzungssystem (Vernetzer und Beschleuniger), Weichmacher, Wachse, Alterungsschutzmittel, Mastikationshilfsmittel und Aktivatoren.
Der Mengenanteil der Gesamtmenge an Zusatzstoffen beträgt 5 bis 200 phr, bevorzugt 5 bis 100 phr und wiederum besonders bevorzugt 30 bis 80.

Die Vulkanisation wird in Anwesenheit von Schwefel oder Schwefelspendern durchgeführt, wobei einige Schwefelspender zugleich als Vulkanisationsbeschleuniger wirken können. Schwefel oder Schwefelspender werden im letzten Mischungsschritt in den vom Fachmann gebräuchlichen Mengen (0.4 bis 4 phr, Schwefel bevorzugt in Mengen von 1.5 bis 2.5 phr) der Kautschukmischung zugesetzt. Zur Kontrolle der erforderlichen Zeit und / oder Temperatur der Vulkanisation und zur Verbesserung der Vulkanisateigenschaften kann die Kautschukmischung vulkanisationsbeeinflussende Substanzen wie Vulkanisationsbeschleuniger, Vulkanisationsverzögerer und Vulkanisationsaktivatoren in den üblichen Mengen enthalten, die erfindungsgemäß in den obig beschriebenen Zusatzstoffen enthaltend sind.

Die Herstellung der erfindungsgemäßen Kautschukmischung erfolgt nach dem in der Kautschukindustrie üblichen Verfahren, bei dem zunächst in ein oder mehreren Mischstufen eine Grundmischung mit allen Bestandteilen außer dem Vulkanisationssystem (Schwefel und vulkanisationsbeeinflussende Substanzen) hergestellt wird. Durch Zugabe des Vulkanisationssystems in einer letzten Mischstufe wird die Fertigmischung erzeugt. Die Fertigmischung wird z.B. durch einen Extrusionsvorgang weiterverarbeitet und in die entsprechende Form gebracht. Zur Verwendung in Fahrzeugreifen wird die Mischung bevorzugt in die Form eines Laufstreifens gebracht und bei der Herstellung des Fahrzeugreifenrohlings wie bekannt aufgebracht. Der Laufstreifen kann aber auch in Form eines schmalen Kautschukmischungsstreifens auf einen Reifenrohling aufgewickelt werden. Die Herstellung der erfindungsgemäßen Kautschukmischung zur Verwendung als body compound in Fahrzeugreifen erfolgt wie bereits für den Laufstreifen beschrieben. Der Unterschied liegt in der Formgebung nach dem Extrusionsvorgang. Die so erhaltenen Formen der erfindungsgemäßen Kautschukmischung für eine oder mehrere unterschiedliche body-Mischungen dienen dann dem Aufbau eines Reifenrohlings. Zur Verwendung der erfindungsgemäßen Kautschukmischung in Flachgurten, insbesondere in Förderbändern, wird die extrudierte Mischung in die entsprechende Form gebracht und dabei oder nachher häufig mit Festigkeitsträgern, z.B. synthetische Fasern oder Stahlcorde, versehen. Zumeist ergibt sich so ein mehrlagiger Aufbau, bestehend aus einer und / oder mehrerer Lagen Kautschukmischung, einer und / oder mehrerer Lagen gleicher und / oder verschiedener Festigkeitsträger und einer und / oder mehreren weiteren Lagen dergleichen und / oder einer anderen Kautschukmischung.

Die Erfindung soll nun anhand von Vergleichs- und Ausführungsbeispielen, die in Tabelle 1 zusammengefasst sind, näher erläutert werden.

Bei sämtlichen in der Tabelle enthaltenen Mischungsbeispielen sind die angegebenen Mengenangaben Gewichtsteile, die auf 100 Gewichtsteile Gesamtkautschuk bezogen sind (phr). Die Vergleichsmischung ist mit V gekennzeichnet, die erfindungsgemäße Mischung ist mit E gekennzeichnet.

Die Mischungsherstellung erfolgte unter üblichen Bedingungen in zwei Stufen in einem Labortangentialmischer. Aus sämtlichen Mischungen wurden Prüfkörper durch Vulkanisation hergestellt und mit diesen Prüfkörpern für die Kautschukindustrie typische Materialeigenschaften bestimmt. Für die obig beschriebenen Tests an Prüfkörpern wurden folgende Testverfahren angewandt:
• Shore-A-Härte bei Raumtemperatur (RT) gemäß DIN 53 505
• Rückprallelastizität bei Raumtemperatur (RT) und 70 °C gemäß DIN 53 512
• Spannungswerte bei 300% statischer Dehnung gemäß DIN 53 504
• Weiterreißwiderstand bei Raumtemperatur (RT) und 100°C gemäß DIN 53 515

**Tabelle 1**

| **Bestandteile** | **Einheit** | **V** | **E** |
|---|---|---|---|
| Polymer | phr | 100 | 100 |
| Ruß | phr | 45 | 45 |
| Nicht angebundene Kieselsäure | phr | 6 | -- |
| Siliciumcarbid | phr | -- | 6 |
| **Eigenschaften** | | | |
| Härte bei RT | Shore A | 58.1 | 59.0 |
| Härte bei 70°C | Shore A | 53.7 | 55.2 |
| Rückprall bei RT | % | 47.9 | 40.2 |
| Rückprall bei 70°C | % | 55.4 | 59.2 |
| Spannungswert 300% | MPa | 9.74 | 11.10 |
| Weiterreißwiderstand bei RT | N/mm | 116 | 110 |

Gegenüber der Vergleichsmischung ist in der erfindungsgemäßen Kautschukmischung der gesamte Mengenanteil an nicht angebundener Kieselsäure durch Siliziumcarbid ersetzt worden. Die Daten der Tabelle 1 zeigen, dass die Härte bei 70°C und der Spannungswert bei 300% statischer Dehnung in der erfindungsgemäßen Kautschukmischung vergleichsweise ansteigen. Der Fachmann bezeichnet dies als steifer werden der Mischung.

Ungeachtet dieses Anstiegs in der Mischungssteifigkeit bleibt die Risseigenschaft, dargestellt durch die Bestimmung des Weiterreißwiderstandes, auf dem gleichen Niveau. Der Rückprall der erfindungsgemäßen Kautschukmischung hingegen verbessert sich vergleichsweise um 4%.

## Patentansprüche

1. Kautschukmischung **gekennzeichnet durch** folgende Zusammensetzung:
- 30 - 100 phr zumindest eines Dienkautschukes,
- 0 - 15 phr nicht angebundene Kieselsäure
- 2 - 15 phr nicht angebundenes Siliziumcarbid und / oder Siliziumnitrid
- 5 - 200 phr sonstige Zusatzstoffe.

2. Kautschukmischung nach Anspruch 1, **dadurch gekennzeichnet, dass** zumindest ein Dienkautschuk ausgewählt ist aus der Gruppe, bestehend aus Naturkautschuk, synthetischem Polyisopren, Polybutadien, Styrol-Butadien-Copolymeren.

3. Kautschukmischung nach Anspruch 1 oder 2, **dadurch gekennzeichnet, dass** der Mengenanteil an nicht angebundener Kieselsäure 0 bis 10 phr beträgt.

4. Kautschukmischung nach einem der Ansprüche 1 bis 3, **dadurch gekennzeichnet, dass** der Mengenanteil an nicht angebundener Kieselsäure 0 bis 6 phr beträgt.

5. Kautschukmischung nach einem der Ansprüche 1 bis 4, **dadurch gekennzeichnet, dass** der Mengenanteil des Siliziumcarbids und / oder Siliziumnitrids 4 bis 10 phr beträgt.

6. Kautschukmischung nach einem der Ansprüche 1 bis 5, **dadurch gekennzeichnet, dass** das Siliziumcarbid und / oder das Siliziumnitrid eine Partikelgröße von 10-200 nm im Durchmesser besitzt.

7. Kautschukmischung nach Anspruch 6, **dadurch gekennzeichnet, dass** das Siliziumcarbid und / oder das Siliziumnitrid eine Partikelgröße kleiner als 100 nm im Durchmesser besitzt.

8. Kautschukmischung nach einem der Ansprüche 1 bis 7, **dadurch gekennzeichnet, dass** der Mengenanteil der Zusatzstoffe 5 bis 100 phr beträgt.

9. Kautschukmischung nach Anspruch 8, **dadurch gekennzeichnet, dass** der Mengenanteil der Zusatzstoffe 30 bis 80 phr beträgt.

10. Verwendung einer Kautschukmischung nach einem der Ansprüche 1 bis 9 zur Herstellung eines Reifens.

11. Verwendung einer Kautschukmischung nach Anspruch 10 zur Herstellung des Laufstreifens eines Reifens.

12. Verwendung einer Kautschukmischung nach Anspruch 10 zur Herstellung einer Body-Mischung eines Reifens.

13. Verwendung einer Kautschukmischung nach Anspruch 12 zur Herstellung einer Body-Mischung eines Reifens, beinhaltend Seitenwand, Innenseele, Apex, Gürtel, Schulter, Gürtelprofil, Squeege, Karkasse, Wulstverstärker und / oder Bandage.

14. Verwendung einer Kautschukmischung nach einem der Ansprüche 1 bis 9 zur Herstellung eines Flachgurtes.

15. Verwendung einer Kautschukmischung nach Anspruch 14 zur Herstellung eines Fördergurtes.

16. Verwendung einer Kautschukmischung nach Anspruch 15 zur Herstellung der Laufseite eines Fördergurtes.
